(19) Europäisches Patentamt
European Patent Office
Office européen des brevets

(11) **EP 2 393 678 B1**

(12) **EUROPÄISCHE PATENTSCHRIFT**

(45) Veröffentlichungstag und Bekanntmachung des Hinweises auf die Patenterteilung:
**16.04.2014  Patentblatt 2014/16**

(21) Anmeldenummer: **10701314.6**

(22) Anmeldetag: **09.01.2010**

(51) Int Cl.:
**B60G 17/016** (2006.01)

(86) Internationale Anmeldenummer:
**PCT/EP2010/000067**

(87) Internationale Veröffentlichungsnummer:
**WO 2010/089011 (12.08.2010 Gazette 2010/32)**

(54) **VERFAHREN ZUR ANSTEUERUNG EINES AKTIVEN FAHRWERKS EINES ZWEIACHSIGEN ZWEISPURIGEN KRAFTFAHRZEUGS**

METHOD FOR ACTUATING AN ACTIVE SUSPENSION OF A TWO-AXLE TWO-TRACK MOTOR VEHICLE

PROCÉDÉ POUR COMMANDER UN MÉCANISME DE ROULEMENT ACTIF D'UN VÉHICULE À MOTEUR À DEUX ESSIEUX ET DEUX VOIES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **04.02.2009   DE 102009007356**

(43) Veröffentlichungstag der Anmeldung:
**14.12.2011   Patentblatt 2011/50**

(73) Patentinhaber: **Bayerische Motoren Werke Aktiengesellschaft**
**80809 München (DE)**

(72) Erfinder:
• **LENTHAPARAMBIL, Nino**
  **80807 München (DE)**
• **WEBER, Ingo**
  **85757 Karlsfeld (DE)**

(56) Entgegenhaltungen:
**EP-A1- 2 141 036**          **DE-A1-102004 057 928**
**DE-A1-102005 037 478**    **GB-A- 2 382 336**
**JP-A- 4 135 909**

**Beschreibung**

Die Erfindung betrifft ein Verfahren nach dem Oberbegriff des Anspruchs 1. Zum Stand der Technik wird neben der DE 10 2005 037 478 A1 auf die DE10 2004 057 928 A1 verwiesen.

Die in heutigen zweispurigen Kraftfahrzeugen verbauten sog. Wankstabilisierungssysteme, die ein aktives Fahrwerk darstellen und beispielsweise bzw. insbesondere durch mittig geteilte Querstabilisatoren mit zwischen diesen Stabilisator-Hälften eingebauten Stellmotoren als Aktuatoren, welche diese Hälften gegeneinander verdrehen können, ausgebildet sind, sind vorrangig im Hinblick auf eine Reduktion des Wankwinkels des Fahrzeug-Aufbaus ausgelegt. Bekanntlich bewirkt die bei Kurvenfahrten des Fahrzeugs auftretende Querbeschleunigung ein Wankmoment um die Rollachse des Fahrzeugs. Dabei ist der Fahrzeugaufbau in einem sog. passiven Fahrzeug oder Fahrwerk, welches kein (aktives) Wankstabilisierungssystem besitzt, durch die Tragfedern, Stabilisatoren und Dämpfer abgestützt. Aufgrund der Wankabstützung mit passiven Kraftelementen resultiert ein bestimmter Wankwinkel. Bei einem sog. aktiven Fahrwerk mit einem Wankstabilisierungssystem wird ein sog. Wankabstützmoment in das Fahrwerk eingeleitet, welches den bzw. diesen Wankwinkel reduziert.

Grundsätzlich zu berücksichtigen ist jedoch auch das Eigenlenkverhalten eines zweispurigen zweiachsigen Fahrzeugs. Bekanntlich wird dessen Eigenlenkverhalten neben den Schräglaufsteifigkeiten der beiden Achsen mit zunehmender Querbeschleunigung auch von der Radlastdifferenz an den Achsen beeinflusst. Aufgrund der dem Fachmann bekannten nichtlinearen degressiven Reifencharakteristik nimmt die Gesamtseitenführungskraft einer Achse mit zunehmender Radlastdifferenz ab. Während einer Kurvenfahrt nimmt die Radlast des kurvenäußeren Rades um einen gewissen Betrag zu und diejenige des kurveninneren um den selben Betrag ab. Dabei verliert jedoch das kurveninnere Rad mehr Seitenführungskraft als das kurvenäußere Rad hinzu gewinnt. Mit einer aktiven Wankstabilisierung wird dieses Phänomen grundsätzlich verstärkt. Jedoch kann bei zweiachsigen Fahrzeugen, die an jeder Achse mit einem Wankstabilisierungssystem ausgerüstet sind, durch geeignete Verteilung des eingeleiten Wankabstützmoments zwischen den beiden Achsen des Fahrzeugs das Eigenlenkverhalten des Fahrzeugs gezielt beeinflusst werden. Dabei führt eine stärkere Wankmomentabstützung an der Vorderachse zu einem mehr untersteuernden Fahrverhalten, während eine stärkere Wankmomentabstützung an der Hinterachse zu einem tendenziell mehr übersteuernden Fahrverhalten führt. Während die Summe der an den beiden Achsen eines Fahrzeugs eingeleiteten Wankabstützmomente den Wankwinkel bestimmt bzw. reduziert, beeinflusst die Aufteilung des gesamten Wankabstützmoments zwischen der Vorderachse und der Hinterachse das Eigenlenkverhalten des Fahrzeugs. Bei einem Fahrzeug, bei dem ein Wankabstützmoment bzw. entsprechende einem Wanken des Fahrzeug-Aufbaus entgegen gerichtete Kräfte sowohl an der Vorderachse als auch an der Hinterachse in das Fahrwerk eingeleitet werden können, kann daher das Wankverhalten und das Gierverhalten des Fahrzeugs unabhängig voneinander beeinflusst werden.

In der Praxis regeln Wankstabilisierungssysteme maßgeblich den Fahrkomfort des Kraftfahrzeugs, so dass bei der Ansteuerung eines Wankstabilisierungssystems vorrangig dessen sog. Vertikaldynamik betrachtet wird. Dabei wird sowohl mit einem Einachs-Wankstabilisierungssystem, bei welchem lediglich an einer der beiden Fahrzeug-Achsen ein Aktuator im Sinne des Oberbegriffs des unabhängigen Patentanspruchs vorgesehen ist, oder bei Zweiachs-Wankstabilisierungssystem mit entsprechenden Aktuatoren an beiden Fahrzeug-Achsen der Wankwinkel des Fahrzeug-Aufbaus verringert, so dass der Reisekomfort für die Fahrzeug-Insassen deutlich ansteigt. Hingegen wird auf die Querdynamik und Längsdynamik des Fahrzeugs in Verbindung mit der Ansteuerung eines Wankstabilisierungssystems nur sehr eingeschränkt geachtet, weshalb hier noch ein deutliches Verbesserungspotenzial vorhanden ist. Zumeist wird heutzutage durch die Komfortauslegung des bzw. der Aktuatoren eines Wankstabilisierungssystems das Eigenlenkverhalten des Fahrzeugs beeinflusst. Vorliegend wurde nun erkannt, dass bei herkömmlichen Wankstabilisierungssystemen die Möglichkeiten zur Beeinflussung der unter fahrdynamischen Gesichtspunkten besonders wichtigen Querdynamik des Fahrzeugs bislang nur eingeschränkt genutzt werden, um das Fahrzeugverhalten zu optimieren, d.h. bislang wird das Potenzial des oder der besagten Aktuators/Aktuatoren eines solchen aktiven Fahrwerks noch nicht ausgeschöpft. Dies hat zur Folge, dass ein mit einem üblichen Wankstabilisierungssystem ausgestattetes Fahrzeug bspw. stark untersteuernd durch die Kurve fährt.

Zunächst besteht - wie bei einem Wankstabilisierungssystem üblich - zwar das Ziel, den Wankwinkel des Fahrzeug-Aufbaus zu begrenzen bzw. falls möglich so gering als möglich zu halten. Weiterhin trägt zur Ansteuerung der besagten Aktuatoren des Wankstabilisierungssystems jedoch eine Vorsteuerung bei, welche querdynamische Einflüsse berücksichtigt. Es können also gegebenenfalls bzw. in Abhängigkeit von aktuellen Randbedingungen und insbesondere in Abhängigkeit von der Größe einer aktuell auf das Fahrzeug einwirkenden Querbeschleunigung geringe Wankwinkel zugelassen werden und somit Abstriche hinsichtlich des Komforts bzw. vertikaldynamischer Anforderungen gemacht werden, wenn dadurch gezielt ein gewünschtes sicheres bzw. stabiles Fahrverhalten eingestellt werden kann. Anzustreben ist dabei, dass sich tendenziell ein neutrales bis leicht untersteuerndes Fahrverhalten ergibt. Zusätzlich zu dieser reinen Vorsteuerung hinsichtlich der Fahrzeug-Querdynamik geht im Hinblick auf diese Querdynamik auch eine Regelung mit Rückführung eines gemessenen Zustandes und eines daraufhin erfolgenden Soll-Ist-Abgleichs in die Ansteuerung des besagten Aktuators des Wankstabilisierungssystems ein, wobei es sich im wesentlichen um eine Gierratenregelung handelt, d.h. es wird in einem geeigneten Regler bzw. Regelkreis vorzugsweise die Ist-Gierrate des Fahrzeugs mit einer anhand eines geeigneten Modells ermittelten Soll-Gierrate verglichen.

Wie bereits ausgeführt wurde, neigt ein Fahrzeug umso mehr zum Untersteuern, je größer der Anteil des an der Vorderachse abgestützten Wankmoments ist. Bei einem Fahrzeug, welches nur an einer seiner beiden Achsen mit einem "aktiven" Wankstabilisierungssystem, welches gezielt einem Wanken des Fzg.-Aufbaus entgegen gerichtete Kräfte in das Fahrwerk einzuleiten vermag, versehen ist, wird durch die Festlegung des vom Wankstabilisierungssystem übernommen Anteils des Wankabstützmoments gleichzeitig der Anteil des von der anderen nicht aktiven Achse, welche in üblicher Weise mit einem herkömmlichen (nicht geteilten) Querstabilisator ausgestattet ist, übernommenen Wank-stützmoments verändert. Nachdem neben der gewünschten Begrenzung des Wankwinkels zusätzlich die Querdynamik des Fahrzeugs bei der Ansteuerung des einzigen, da nur an einer Achse vorgesehenen Aktuators des Wankstabilisierungssystems berücksichtigt wird, kann es im Hinblick auf eine Optimierung des querdynamischen Fahrverhaltens durchaus sinnvoll sein, einen gewissen Wankwinkel zuzulassen. Dabei gilt auch bei einem zweiachsigen Fahrzeug mit einem lediglich an einer Achse vorgesehenen ("aktiven") Wankstabilisierungssystem, dass bei Untersteuern des Fahrzeugs durch Erhöhung des Anteils des Wankabstützmoments an der Hinterachse ein tendenziell mehr übersteuerndes Fahrverhalten erzeugt werden kann. Dies rührt daher, dass durch diese Maßnahme die Radlastdifferenz an der Vorderachse verringert und an der Hinterachse erhöht wird. Dies führt zu einer Erhöhung der Querkraft an der Vorderachse und zu einer Verringerung der Querkraft an der Hinterachse. Umgekehrt kann bei Übersteuern des Fahrzeugs durch eine Erhöhung des Wankabstützmoments an der Vorderachse ein tendenziell mehr untersteuerndes Fahrverhalten erreicht werden.

Es wurde erkannt, dass neben der Begrenzung des Wankwinkels und der Berücksichtigung der Fahrzeug-Querdynamik weitere Einflussfaktoren bei der Ansteuerung eines aktiven Fahrwerks eines zweiachsigen zweispurigen Kraftfahrzeugs nach dem Oberbegriff des Anspruchs 1, d.h. mit einem Wankstabilisierungssystem nur an einer der beiden Achsen, berücksichtigt werden können. Mit Berücksichtigung welcher Randbedingungen ein gutes und sicheres Fahrverhalten erzielt werden kann, soll hiermit aufgezeigt werden (= Aufgabe der vorliegenden Erfindung).

Zur Lösung dieser Aufgabe ist vorgeschlagen, dass bei der Ansteuerung des Aktuators zusätzlich ein Sollverhalten bei Teilbremsen und der Übergang zu einer Vollbremsung berücksichtigt wird, indem bei Teilbremsen ein größerer Anteil des gesamten Wankabstützmoments auf die Vorderachse verlagert wird, während bei einer Vollbremsung die Radlastdifferenz an der jeweiligen Achse durch eine Reduktion des Wankabstützmoments verringert wird. Vorteilhafte Weiterbildungen sind Inhalt der Unteransprüche.

Es wird somit bei der Ansteuerung des Aktuators eines Wankstabilisierungssystems in einem längsdynamischen Referenzmodell zusätzlich ein Sollverhalten bei sog. Teilbremsen des Fahrzeugs sowie der Übergang vom Teilbremsen zu einer Vollbremsung berücksichtigt. Beim Teilbremsen neigt ein Fahrzeug zum Übersteuern. Dies kann durch eine gezielte vorgesteuerte Veränderung des Verhältnisses des Wankabstützungsmoments an der Vorderachse zu demjenigen an der Hinterachse teilweise kompensiert werden. Die Übersteuer-Neigung wird dann nahezu neutral und somit wird das Fahrzeug besser beherrschbar. Beispielsweise kann dies durch eine kennfeldbasierte Ansteuerung realisiert werden, wobei beim Teilbremsen stets eine größerer Anteil des Wankabstützmoments an der Vorderachse anliegen sollte, um das durch das Teilbremsen bedingte Übersteuern zu kompensieren und wieder ein neutrales bis leicht untersteuerndes Fahrverhalten zu erzeugen. Bei einer Vollbremsung hingegen neigt ein Fahrzeug eher zum Untersteuern, da auf allen vier Rädern versucht wird, die bestmögliche Verzögerung zu erreichen. Gleichzeitig soll das Fahrzeug aber auch dem Sollkurs des Fahrers folgen. Dies kann entweder durch eine Reduktion des Schlupfes am jeweiligen Rad oder/und durch eine Veränderung des Anteils des Wankabstütz-Moments und somit der Radlastdifferenz an der jeweiligen Achse erreicht werden.

Im Sinne einer vorteilhaften Weiterbildung kann bei der Ansteuerung des Aktuators eines Wankstabilisierungssystems nach dem Patentanspruch 1 in einem querdynamischen Referenzmodell zusätzlich ein Fahrzeug-Sollverhalten bei Lastwechsel berücksichtigt werden. Bekanntlich neigt bei Lastwechseln ein frontgetriebenes Fahrzeug zum Untersteuern und ein heckgetriebenes Fahrzeug zum Übersteuern. Dieser unerwünschte Effekt kann nun nach entsprechender Erkennung eines Lastwechselvorgangs bei einem frongetriebenen Fahrzeug durch einen erhöhten Anteil der Wankmoment-Abstützung an der Hinterachse bzw. bei einem heckgetriebenen Fahrzeug durch einen erhöhten Anteil der Wankmoment-Abstützung an der Vorderachse verhindert bzw. zumindest minimiert werden. Dabei kann grundsätzlich der gleiche Mechanismus wie bei der weiter oben beschriebenen querdynamischen Vorsteuerung verwendet werden, jedoch mit anderen Erkennungsalgorithmen und ggf. mit geeignet abgewandelten Sollverhalten. Was einen möglichen Erkennungsalgorithmus für das Auftreten eines Lastwechselfalls betrifft, so erfährt das Fahrzeug bei einem Lastwechsel eine Längsverzögerung, obwohl es nicht abgebremst wird. Mit Hilfe eines Störgrößenbeobachters ist dieser Zustand erkennbar und es kann aktiv eine entsprechende Vorsteuerung bezüglich der Aktuatoren eines Wankstabilisierungssystems durchgeführt werden noch ehe die beschriebene Gierratenregelung aktiv werden muss. Ein solcher Störgrößenbeobachter kann hierfür bspw. das sog. Motorschleppmoment des Antriebsaggregats verfolgen.

Weiterhin kann in die Ansteuerung des (oder ggf. der) besagten Aktuators (ggf. Aktuatoren) des an nur einer Fahrzeug-Achse vorgesehenen Wankstabilisierungssystems eine Vorsteuerung hinsichtlich der Längsdynamik des Fahrzeugs eingehen. Mit Hilfe einer längsdynamischen Vorsteuerung ist es möglich, das durch die Grundauslegung eines Fahrzeugs bzw. von dessen Fahrwerk festgelegte Beschleunigungsverhalten dieses Fahrzeugs zu beeinflussen. Hierbei muss beachtet werden, dass das angetriebene kurveninnere Rad möglichst nicht durchdrehen soll und das kurvenäußere Rad im Antriebsfall nie durchdrehen sollte, um ein möglichst stabiles Fahrverhalten zu erreichen. Dies kann erreicht werden, indem die oben beschriebene rein querdynamische Vorsteuerung für den Antriebsfall solchermaßen modifiziert wird, dass eine möglichst gute Traktion erreicht wird. Für einen Heckantrieb bedeutet dies, dass die Radlastdifferenz an der Hinterachse möglichst gering gehalten werden muss, während bei angetriebener Vorderachse die Radlastdifferenz an dieser Vorderachse möglichst gering zu halten ist. Gleichzeitig sollte hierdurch die Querdynamik des Fahrzeugs so wenig als möglich negativ beeinflusst werden.

Zusätzlich zu einer solchen "längsdynamischen" Vorsteuerung kann nun im Hinblick auf die Längsdynamik des Fahrzeugs auch eine Regelung in die Ansteuerung des Aktuators des Wankstabilisierungssystems eingehen, wobei es sich im wesentlichen um eine Traktionsregelung handelt. Je höher eine Radlastdifferenz an einer angetrieben Achse ist, desto früher neigt ein Rad dieser Achse beim Beschleunigen zum Durchdrehen. Dies kann verhindert werden, indem die Radlastdifferenz an der jeweiligen Antriebsachse durch eine Reduktion des Wankabstützmoments verringert wird, wie vorhergehend beschrieben. Jedoch liegt hier eine starke Wechselwirkung mit der Querdynamik des Fahrzeugs vor. Sowie ein angetriebenes Rad des Fahrzeugs den vorgegebenen Schlupfbereich oder Beschleunigungsbereich überschreitet, wird nun eine auf das Wankstabilisierungssystem des Fahrzeugs einwirkende Regelung aktiviert, um dieses Rad wieder zu stabilisieren. Dies wirkt sich sowohl auf die Längsdynamik als auch auf die Querdynamik des Fahrzeugs positiv aus.

Solange der Aktuator noch eine Kraft in das Fahrwerk einleiten kann und sich nicht in seiner Stellbegrenzung befindet, d.h. noch Stellpotential besitzt, kann gleichzeitig zur Wankstabilisierung und somit zur Beeinflussung der Vertikaldynamik die Querdynamik des Fahrzeugs gezielt beeinflusst werden, ohne hierdurch signifikante Einbußen hinsichtlich des Komforts hinnehmen zu müssen. Durch fortlaufende Überwachung bzw. Berechnung und/oder Messung der aktuellen Wankabstützung kann durch einen Vergleich mit der durch den Aktuator maximal erzeugbaren Wankabstützung das verbleibende Potential des Aktuators zu jedem Zeitpunkt oder Zustand ermittelt werden. Je höher nun die Querbeschleunigung des Fahrzeugs ist und je schneller dieses eine Kurve befährt, desto stärker sollte der Fahrzeug-Aufbau vom aktiven Wankstabilisierungssystems abgestützt werden, jedoch kann hierdurch der verbleibende Spielraum zur gleichzeitigen Beeinflussung der Querdynamik abnehmen. Daher kann es insbesondere in fahrdynamisch kritischen Situationen durchaus Sinn machen, eine aus Komfortgründen vorgegebene Einwankgrenze zu überschreiten, um wieder einen stabilen Fahrzustand herzustellen. In Fahrzuständen, die weit vom kritischen Grenzbereich entfernt sind, kann hingegen dem Komfort und somit einer Begrenzung des Wankwinkels die höchste Priorität zugeteilt werden, während mit der zweithöchsten Priorität das Ziel, die Querdynamik des Fahrzeugs zu verbessern, verfolgt werden kann.

Weiterhin wurde erkannt, dass es bei einem zweiachsigen Fahrzeug mit einem nur an einer der beiden Achsen vorgesehenen "aktiven" Wankstabilisierungssystem, mit welchem mittels zumindest eines Aktutors gezielt in Vertikalrichtung orientierte und einem Wanken des Aufbaus entgegen gerichtete Kräfte in die Radaufhängung bzw. in das Fahrwerk eingeleitet werden können, durch geeignete Ansteuerung des Aktuators in Abhängigkeit von der aktuell auf das Fahrzeug einwirkenden Querbeschleunigung gezielt ein Wankwinkel zugelassen oder eingestellt werden kann, der ein bestmögliches Fahrverhalten des Fahrzeugs sicherstellt.

Als ein solches Fahrverhalten wird ein im wesentlichen neutrales Fahrverhalten mit einer geringfügigen Untersteuertendenz erkannt. In diesem Sinne kann also durch geeignete Ansteuerung des Aktuators in Abhängigkeit von der aktuell auf das Fahrzeug einwirkenden Querbeschleunigung ein Wankwinkel zugelassen oder eingestellt werden, der sich ggf. unter Berücksichtigung eines betragsmäßig geringen und ein geringfügiges untersteuerndes Fahrverhalten erzeugenden Zusatz-Wankwinkels im wesentlichen aus einer sog. reibwertunabhängigen Wankkennlinie für neutrales Eigenlenkverhalten ergibt, welche für jede mögliche Querbeschleunigung die Größe eines sog. neutralen Wankwinkels angibt, mit welchem sich das Fahrzeug neutral, d.h. weder übersteuernd, noch signifikant untersteuernd verhält. Hierbei handelt es sich dann um eine besonders bevorzugte Vorsteuerung hinsichtlich der Querdynamik des Fahrzeugs, wobei diese Vorsteuerung selbstverständlich auch die Vertikaldynamik (und somit einen Wankwinkel des Fahrzeug-Aufbaus) berücksichtigt.

Im Hinblick auf die Möglichkeiten, mittels eines aktiven Wankstabilisierungssystems sowohl die Vertikaldynamik als auch die Querdynamik (und ggf. auch die Längsdynamik) eines zweiachsigen zweispurigen Fahrzeugs beeinflussen zu können, ist ein solches aktives Wankstabilisierungssystem bzw. ein entsprechender Aktuator nur an einer Achse des Fahrzeugs naturgemäß weniger günstig als wenn an beiden Achsen des Fahrzeugs entsprechende Aktuatoren vorgesehen und dann sowohl an der Vorderachse als auch an der Hinterachse gezielt Kräfte bzw. Momente zur Wankmomentabstützung in das Fahrwerk einleitbar sind. Jedoch gibt es andere Gründe, die für das Vorsehen eines "aktiven" Wankstabilisierungssystems nur an einer Achse sprechen, nämlich die Einsparung von Energiebedarf und Kosten sowie Vorteile hinsichtlich des benötigten Bauraums. Allerdings ist dann das Wankverhalten (und somit die Vertikaldynamik) des Fahrzeugs nicht mehr unabhängig vom Gierverhalten (und somit von der Querdynamik) beeinflussbar. Es besteht somit ein Zielkonflikt, der jedoch mit dem im Folgenden erläuterten mechatronischen Entwurf entschärft werden kann, indem je nach Fahrzustand das Wankverhalten oder das Gierverhalten des Fahrzeugs priorisiert wird.

Für die Erstellung dieses mechantronischen Entwurfs wurde zunächst eine Potenzialanalyse zur Bestimmung von Vorteilen und Nachteilen der möglichen Ausführungsformen einer einachsigen aktiven Wankstabilisierung durchgeführt. Dabei ist das Ziel, ein neutrales Eigenlenkverhalten des Fahrzeugs in Abhängigkeit vom Wankwinkel und vom Reibwert zwischen den Fahrzeug-Rädern und der Fahrbahn darzustellen. Hierfür wurden in Simulation quasistationäre Kreisfahrten durchgeführt, und zwar mit einem Zwei-Spur-Gesamtfahrzeugmodell. Für einen gegebenen Kreisradius und verschiedene Reibwerte wurden quasistationäre Kreisfahrten simuliert, und bei jeder Simulation wurde mit dem Wankstabilisierungssystem entweder an der Vorderachse oder an der Hinterachse eine lineare querbeschleunigungsabhängige Wankwinkelvorgabe umgesetzt. Aus jeder der Simulationen für einen bestimmten Reibwert wurde dann eine sog. Grenz-Querbeschleunigung ermittelt, ab welcher das Fahrzeug den vorgegebenen Kreisradius verlässt. Aus diesen Grenz-Querbeschleunigungen konnte dann eine maximale Querbeschleunigung mit dem zugehörigen Wankwinkel bestimmt werden.

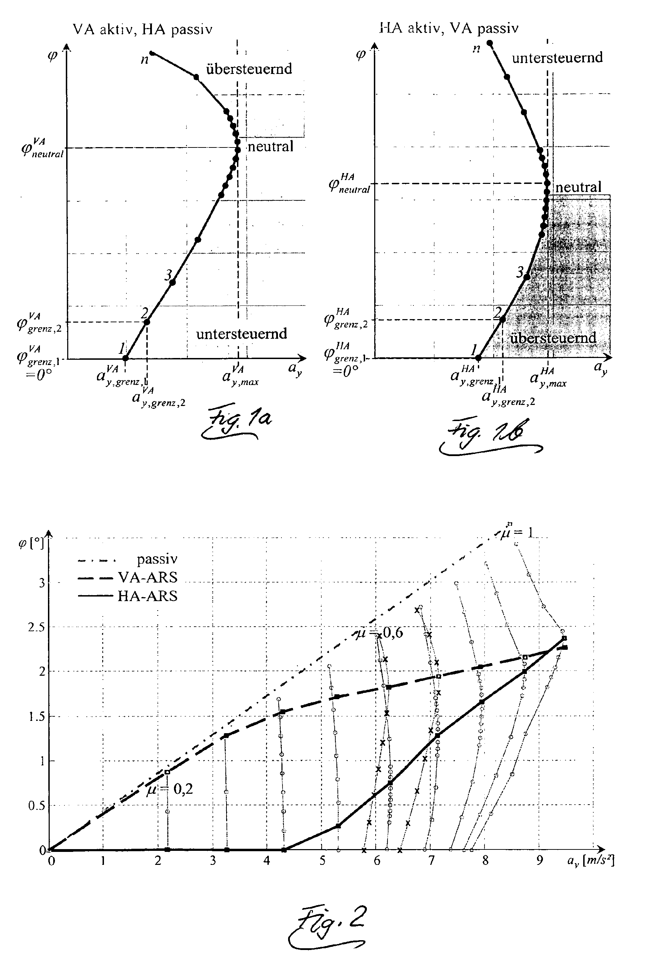

Die beigefügte Figur **1a** zeigt den entsprechenden Zusammenhang zwischen dem Wankwinkel $\varphi$ des Fahrzeug-Aufbaus und der auf das Fahrzeug bei einer Kurvenfahrt einwirkenden Querbeschleunigung $a_y$ für ein aktives Wankstabilisierungssystem an der Vorderachse ("VA") (mit dann passiver Hinterachse) und die Figur **1b** diesen Zusammenhang für ein aktives Wankstabilisierungssystem an der Hinterachse ("HA") des Fahrzeugs (mit dann passiver Vorderachse).

Aus diesen beiden Figuren kann abgeleitet werden, dass Grenz-Querbeschleunigungen $a_{y,grenz}$ zunächst mit zunehmender Wankwinkelvorgabe unabhängig von der Auswahl der "aktiven" Achse ansteigen, bis die maximale Querbeschleunigung $a_{y,max}$ mit dem zugehörigen Wankwinkel $\varphi_{neutral}$ erreicht wird. Eine weitere Erhöhung der Wankwinkelvorgabe führt zu abnehmenden Grenz-Querbeschleunigungen. Je nach Wahl der aktiven Achse unterscheidet sich das Gierverhalten beim Verlassen des für die quasistationäre Kreisfahrt vorgegebenen Kreisradius. Während das Fahrzeug mit aktiver Vorderachse für alle Wankwinkel kleiner $\varphi_{neutral}$ untersteuernd und größer $\varphi_{neutral}$ übersteuernd den Kreis verlässt, verhält sich das Fahrzeug mit aktiver Hinterachse genau umgekehrt. Bei der Wankwinkelvorgabe $\varphi = \varphi_{neutral}$ erreicht das Fahrzeug die maximale Querbeschleunigung $a_{y,max}$ und verhält sich neutral, weshalb dieser besagte Wankwinkel $\varphi_{neutral}$ vorliegend als "neutraler Wankwinkel" oder als "Wankwinkel für neutrales Eigenlenkverhalten" bezeichnet wird.

Eine solche Simulationsreihe lässt sich auf unterschiedliche Reibwertepotenziale ausweiten. Aus jeder Simulationsreihe ergibt sich ein Wertepaar aus dem Wankwinkel für neutrales Eigenlenkverhalten $\varphi_{neutral}$ und der maximalen Querbeschleunigung $a_{y,max}$. Aus diesen Wertepaaren entsteht schließlich eine reibwertunabhängige Wankkennlinie für neutrales Eigenlenkverhalten. In Figur 2 ist das Ergebnis der Potenzialanalyse für ein Beispiel-Fahrzeug dargestellt. Darin sind die Grenzkurven mit aktiver Hinterachse (gekennzeichnet durch kleine Kreise) für die Reibwerte $\mu = 0{,}2$ bis $1{,}0$ aufgetragen. Aus Übersichtlichkeitsgründen sind die entsprechenden Grenzkurven für eine aktive Vorderachse (gekennzeichnet durch kleine Kreuze) nur für die Reibwerte $\mu = 0{,}6$ und $\mu = 0{,}7$ dargestellt. Für die Simulationen mit aktiver Hinterachse (als "HA-ARS" bezeichnet) wurden alle Steifigkeiten des passiven Fahrzeugs übernommen. Um eine Vergleichbarkeit zu gewährleisten, wurde die passive Stabilisatorsteifigkeit bei aktiver Vorderachse (als "VA-ARS" bezeichnet) so gewählt, dass bei maximaler Querbeschleunigung der Wankwinkel $\varphi_{neutral}^{VA} \approx \varphi_{neutral}^{HA}$ ist. Bei niedrigen Reibwerten bis $\mu = 0.4$ wandeln sich die besagten (im Diagramm annähernd vertikal verlaufenden) Grenzkurven in Geraden, da in diesem Bereich der Einfluss der Radlast sehr gering ist. Aus diesen beiden reibwertunabhängigen Wankkennlinien für neutrales Eigenlenkverhalten (für die Hinterachse: HA-ARS bzw. für die Vorderachse: VA-ARS) wird deutlich, dass mit einem Wankstabilisierungssystem an der Hinterachse der bessere Kompromiss aus Wankverhalten und Gierverhalten erzielt werden kann, da die sich mit einer aktiven Hinterachse ergebende Wankkennlinie neben dem neutralen Eigenlenkverhalten auch höheren Wankkomfort erzielt. Dabei kann bis hin zu Querbeschleunigungen in der Größenordnung von 4 m/s$^2$ ein Wankwinkel $\varphi = 0°$ eingestellt werden. Mit dann weiter zunehmender Querbeschleunigung sollte hingegen ein Wankwinkel zugelassen werden, der vorteilhafterweise dem Fahrer als Hinweis für den näher rückenden fahrdynamischen Grenzbereich dienen kann.

Im Weiteren wird nun beschrieben, wie diese besagte reibwertunabhängige Wankkennlinie für neutrales Eigenlenkverhalten näherungsweise mit ausreichender Genauigkeit berechnet werden kann. Diese näherungsweise Berechung beinhaltet zunächst eine Berechnung des bei einem Reibwert $\mu = 1$ ein neutrales Fahrverhalten hervorrufenden Wankwinkels $\varphi_{neutral}$ und daraufhin die Approximation der Wankkennlinie durch ein geeignetes Polynom. Zur Ableitung bzw. Darstellung dieser Berechnung werden die folgenden Symbole verwendet:

| | |
|---|---|
| $l$ | Radstand |
| $l_V$ | Abstand zwischen Aufbau-Schwerpunkt und der Vorderachse (VA) |
| $l_H$ | Abstand zwischen Aufbau-Schwerpunkt und der Hinterachse (HA) |
| $F_{yV}$ | Seitenführungskraft an der Vorderachse |

| | |
|---|---|
| $F_{yH}$ | Seitenführungskraft an der Hinterachse |
| $h_w$ | Abstand zwischen Aufbau Schwerpunkt und der Rollachse |
| $m_A$ | Aufbaumasse des Fahrzeugs |
| $m$ | Gesamtmasse des Fahrzeugs |
| $a_{y0}$ $a_{y0}$ | Bis zu dieser Querbeschleunigung wird stationär keinen Wankwinkel zugelassen |
| $a_{y0,max}$ $a_{y0,max}$ | Maximale Querbeschleunigung für einen stationär nicht vorhandenen Wankwinkel |
| $a_{y,max}$ | Maximale Querbeschleunigung |
| $\mu$ | Reibwertpotenzial |
| $g$ | Erdbeschleunigung |
| $\eta$ | Skalierungsfaktor |
| $\alpha$ | Schräglaufwinkel |
| $\Delta F_{zV}$ | Radlastdifferenz an der Vorderachse |
| $\Delta F_{zH}$ | Radlastdifferenz an der Hinterachse |
| $s_V$ | Spurweite an der Vorderachse |
| $s_H$ | Spurweite an der Hinterachse |
| $c_{Tf,V}$ | Tragfedersteifigkeit an der Vorderachse |
| $c_{Tf,H}$ | Tragfedersteifigkeit an der Hinterachse |
| $c_{St,V}$ | Steifigkeit eines passiven Quer-Stabilisators (an der VA) |
| $c_{St,H}$ | Steifigkeit eines passiven Quer-Stabilisators (an der HA) |
| $i_{St,V}$ $i_{St,V}$ | Übersetzungsverhältnis zur Berechnung des Stabilisator-Moments aus dem aktiven Wankabstützmoment an der (aktiven) Vorderachse |
| $i_{St,H}$ $i_{St,H}$ | Übersetzungsverhältnis zur Berechnung des Stabilisator-Moments aus dem aktiven Wankabstützmoment an der (aktiven) Hinterachse |
| $c_{Fz2V}$ , $c_{Fz1V}$, $c_{Fz0V}$ | Koeffizienten für die Approximation der Seitenführungskraft der Vorderachse durch ein Polynom zweiten Grades |
| $c_{Fz2H}$, $c_{Fz1H}$, $c_{Fz0H}$ | Koeffizienten für die Approximation der Seitenführungskraft der Hinterachse durch ein Polynom zweiten Grades Koeffizienten für die Approximation der reibwertunabhängigen |
| $a_0.a_1,a_2,a_4$ | Wankkennlinie für neutrales Eigenlenkverhalten durch ein Polynom vierten Grades. |
| $M_{ARS,V}$ | (aktives) Wankabstütz-Moment an der Vorderachse |
| $M_{ARS,H}$ | (aktives) Wankabstütz-Moment an der Hinterachse |
| $M_{ARS,V,max}$ | maximales (aktives) Wankabstütz-Moment an der Vorderachse |
| $M_{ARS,H,max}$ | maximales (aktives) Wankabstütz-Moment an der Hinterachse |
| $\varphi_{neutral}$ | Wankwinkel für neutrales Eigenlenkverhalten Zusätzlicher Wankwinkel zur Anhebung der Wanck-ennlinie im |
| $\varphi_{zusatz}$ | Grenzbereich, so dass ein neutral bis untersteuerndes Fahrverhalten zusätzlich abgesichert wird |
| $\varphi'_{pas}$ | Steigung der Wankkennlinie bei maximaler Querbeschleunigung |
| $\dot{\psi}$ | Gierrate |
| $v$ | Fahrzeuglängsgeschwindigkeit |
| $\delta$ | Lenkwinkel |

Ausgehend von den Gleichungen des allgemeinen Einspurmodells gelten für den stationären (konstanten) Zustand die folgenden Gleichgewichtsbedingungen:

$$m\, a_{y,max} = F_{yV} + F_{yH}$$

$$0 = F_{yV}\, l_V - F_{yH}\, l_H$$

Für die Seitenführungskräfte folgt daraus:

$$F_{yV} = m\, a_{y,max} \frac{l_H}{l} \qquad \text{und} \qquad F_{yH} = m\, a_{y,max} \frac{l_V}{l}.$$

Dabei wird $a_{y,max}$ definiert mit $a_{y,max} = \mu g \eta$.

Abhängig von den Reifeneigenschaften kann mit dem Skalierungsfaktor $\eta$ das Querbeschleunigungspotenzial $\mu g$ skaliert werden.

Zur Berechnung der Seitenführungskräfte in Abhängigkeit der Radlaständerung wird ein Polynom zweiten Grades gewählt:

$$F_{yV} = c_{Fz2V}\, \Delta F_{zV}^2 + c_{Fz1V}\, \Delta F_{zV} + c_{Fz0V} = m\, a_{y,max}\, \frac{l_H}{l}$$

$$F_{yH} = c_{Fz2H}\, \Delta F_{zH}^2 + c_{Fz1H}\, \Delta F_{zH} + c_{Fz0H} = m\, a_{y,max}\, \frac{l_V}{l}$$

Die Koeffizienten der quadratischen Gleichung müssen für einen gegebenen Reifen bei $\mu = 1$ ermittelt werden. Da jedoch die übertragbare Seitenführungskraft unter anderem auch vom Reifen-Schräglaufwinkel $\alpha$ abhängt, muss zuvor dieser Schräglaufwinkel $\alpha$ ermittelt werden. Hierfür werden die folgenden beiden Eingrenzungen vorgenommen:

Ermittle $\alpha_{min}$, so dass für $F_{yV}\left(\Delta F_{zV} = 0\right) > m\, a_{y,max}\, \dfrac{l_H}{l}$ gilt,

und ermittle $\alpha_{max}$, so dass für $F_{yV}\left(\Delta F_{zH} = m\, g\, \dfrac{l_V}{2l}\right) < m\, a_{y,max}\, \dfrac{l_V}{l}$ gilt.

Mit der ersten Eingrenzung wird sichergestellt, dass das Fahrzeug wankt bzw. einen Wankwinkel in diesem stationären (konstanten) Zustand aufweist. Die zweite dieser beiden Eingrenzungen stellt sicher, dass das kurveninnere Rad nicht abhebt. Aus diesen Extremwerten für $\alpha$ wird der Mittelwert als Schräglaufwinkel für die Berechung bestimmt. Indem der Schräglaufwinkel für die Vorderachse ("VA") und für die Hinterachse ("HA") gleich gewählt wird, ist sichergestellt, dass sich das Fahrzeug in diesem stationären Zustand neutral verhält. Sind die Koeffizienten der quadratischen Gleichung bekannt, lassen sich die Radlaständerungen an der Vorderachse und an der Hinterachse wie folgt berechnen:

$$\Delta F_{zV} = -\left(\frac{c_{Fz1V}}{2c_{Fz2V}}\right) \pm \sqrt{\frac{1}{4}\left(\frac{c_{Fz1V}}{c_{Fz2V}}\right)^2 + \frac{m\, a_{y,max}\, l_H - c_{Fz0V}\, l}{c_{Fz2V}\, l}}$$

$$\Delta F_{zH} = -\left(\frac{c_{Fz1H}}{2c_{Fz2H}}\right)^2 \pm \sqrt{\frac{1}{4}\left(\frac{c_{Fz1H}}{c_{Fz2H}}\right)^2 + \frac{m\, a_{y,max}\, l_V - c_{Fz0H}\, l}{c_{Fz2H}\, l}}$$

Je nachdem wie das Koordinatensystem eingeführt wird, muss eine Lösung jeweils ausgeschlossen werden. An dieser Stelle wird daher statt "$\pm$" mit "+" weitergearbeitet.

Sind die Radlaständerung an der Vorderachse und an der Hinterachse ermittelt, so lässt sich der sog. neutrale Wankwinkel $\varphi_{neutral}$ für neutrales Eigenlenkverhalten mit Hilfe der folgenden Gleichung berechnen, und zwar bei Vorsehen des "aktiven" Wankstabilisierungssystems an der Hinterachse wie folgt:

$$\varphi_{neutral} = \frac{\Delta F_{zV}\, s_V}{c_{Tf,V} + c_{St,V}} = \left( -\left( \frac{c_{Fz1V}}{2c_{Fz2V}} \right) \pm \sqrt{\frac{1}{4}\left( \frac{c_{Fz1V}}{c_{Fz2V}} \right)^2 + \frac{m\, a_{y,max}\, l_H - c_{Fz0V}\, l}{c_{Fz2V}\, l}} \right) \frac{s_V}{c_{Tf,V} + c_{St,V}}$$

bzw. bei Vorsehen des "aktiven" Wankstabilisierungssystems an der Vorderachse wie folgt:

$$\varphi_{neutral} = \frac{\Delta F_{zH}\, s_H}{c_{Tf,H} + c_{St,H}} = \left( -\left( \frac{c_{Fz1H}}{2c_{Fz2H}} \right)^2 \pm \sqrt{\frac{1}{4}\left( \frac{c_{Fz1H}}{c_{Fz2H}} \right)^2 + \frac{m\, a_{y,max}\, l_V - c_{Fz0H}\, l}{c_{Fz2H}\, l}} \right) \frac{s_H}{c_{Tf,H} + c_{St,H}}$$

Ist das (aktive) Wankstabilisierungssystem durch einen weiter oben bereits genannten mittig geteilten Querstabilisator mit zwischen diesen Stabilisator-Hälften eingebautem Stellmotor als Aktuator gestaltet, so kann das benötigte Aktuator-Moment zur Erzielung dieses sog. neutralen Wankwinkels wie folgt berechnet werden:

Für den Fall des "aktiven Stabilisators" an der Hinterachse zu:

$$M_{ARS,H} = (\Delta F_{zH}\, s_H - c_{Tf,H}\, \varphi_{neutral})\, i_{St,H}$$

Für den Fall des "aktiven Stabilisators" an der Vorderachse zu:

$$M_{ARS,V} = (\Delta F_{zV}\, s_V - c_{Tf,V}\, \varphi_{neutral})\, i_{St,V}$$

Eine erste Möglichkeit zur Bestimmung der reibwertunabhängigen Wankkennlinie für neutrales Eigenlenkverhalten in ihrer Gesamtheit besteht nun darin, weitere sog. neutrale Wankwinke" für viele weitere kleinere Reibwerte bzw. Reibwertpotentiale, d.h. für alle $\mu < 1$ analog zu bestimmen, so dass man aus den sich für das jeweilige Reibwertpotential ergebenden Wertepaaren für $a_{y,max}$ und $\varphi_{neutral}$ auf die reibwertunabhängige Wankkennlinie schließen kann.
Eine alternative Möglichkeit zur Bestimmung der reibwertunabhängigen Wankkennlinie für neutrales Eigenlenkverhalten in ihrer Gesamtheit besteht - wie weiter oben bereits erwähnt - darin, dass nach der Bestimmung von $\varphi_{neutral}$ für $\mu = 1$ eine Approximation dieser reibwertunabhängigen Wankkennlinie für neutrales Eigenlenkverhalten mit einem Polynom vierten Grades durchgeführt wird. Dies wird im weiteren erläutert, wobei von folgendem Polynom aus-gegangen wird:

$$\varphi(a_y) = \left( a_4\, a_y^4 + 0\, a_y^3 + a_2\, a_y^2 + a_1\, |a_y| + a_0 \right) \mathrm{sgn}(a_y) = \left( a_4\, a_y^4 + a_2\, a_y^2 + a_1\, |a_y| + a_0 \right) \mathrm{sgn}(a_y)$$

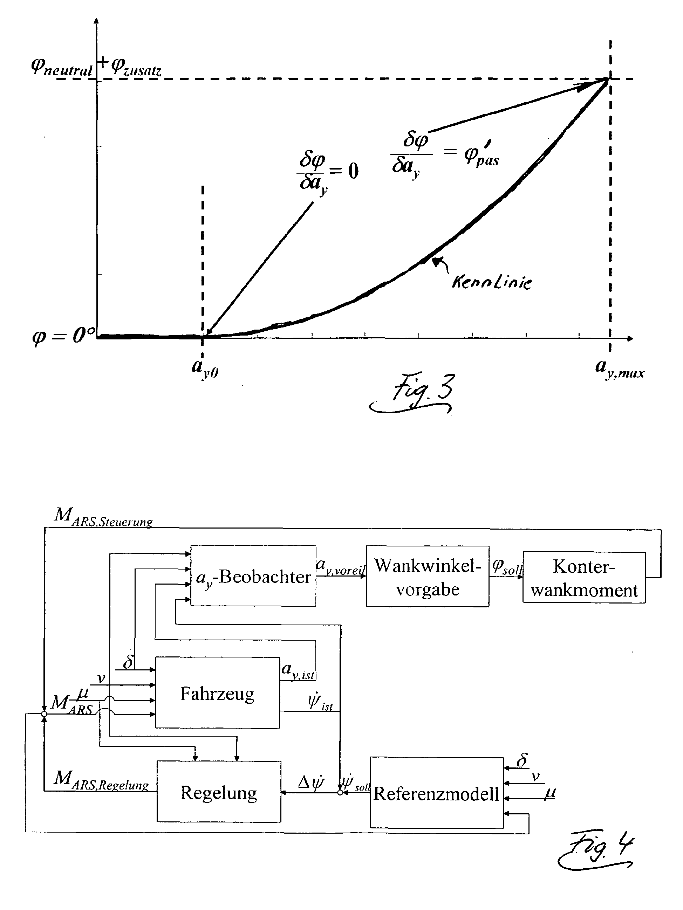

Im Weiteren wird zur Vereinfachung von positiven Querbeschleunigungen ausgegangen, so dass auf die Betragsfunktion und Signum-Funktion (sgn) der vorigen Gleichung verzichtet wird. Zur Bestimmung der vier unbekannten Koeffizienten $a_0$, $a_1$, $a_2$ und $a_4$ werden die folgenden vier Randbedingungen aufgestellt, die auch aus der beigefügten Figur 3 hervorgehen:

$$1. \quad \varphi(a_{y0}) = 0°$$

$$2. \quad \varphi\left(a_{y,\max}\right) = \varphi_{neutral} + \varphi_{zusatz}$$

$$3. \quad \frac{\partial \varphi\left(a_{y0}\right)}{\partial a_y} = 0$$

$$4. \quad \frac{\partial \varphi\left(a_{y,\max}\right)}{\partial a_y} = \varphi'_{pas}$$

Mit diesen vier Randbedingungen lassen sich die Koeffizienten $a_0$, $a_1$, $a_2$ und $a_4$ wie folgt berechnen:

$$a_4 = \frac{\varphi_{neutral} + \varphi_{zusatz}}{\xi} + \frac{1}{2}\frac{\varphi'_{pas}}{\zeta}$$

$$a_3 = 0$$

$$a_2 = -2\frac{\left(a_{y0}^2 + a_{y,max}\,a_{y0} + a_{y,max}^2\right)\left(\varphi_{neutral} + \varphi_{zusatz}\right)}{\xi} - \frac{1}{2}\frac{\left(3a_{y0}^2 + 2a_{y,max}\,a_{y0} + a_{y,max}^2\right)\varphi'_{pas}}{\zeta}$$

$$a_1 = 4\frac{a_{y,max}\,a_{y0}\left(\varphi_{neutral} + \varphi_{zusatz}\right)}{a_{y0}^3 - 3a_{y0}^2 a_{y,max} + 3a_{y,max}^2 a_{y0} - a_{y,max}^3} + \frac{\left(a_{y,max} + a_{y0}\right)a_{y0}\varphi'_{pas}}{a_{y0}^2 - 2a_{y,max}a_{y0} + a_{y,max}^2}$$

$$a_0 = \frac{a_{y0}^2\left(a_{y0}^2 - 2a_{y,max}a_{y0} - 2a_{y,max}^2\right)\left(\varphi_{neutral} + \varphi_{zusatz}\right)}{\xi} - \frac{1}{2}\frac{\left(a_{y,max} + 2a_{y0}\right)a_{y0}^2 a_{y,max}\varphi'_{pas}}{\zeta}$$

mit

$$\xi = a_{y0}^4 - 2a_{y0}^3 a_{y,max} + 2a_{y,max}^3 a_{y0} - a_{y,max}^4$$

$$\zeta = a_{y0}^3 - a_{y0}^2 a_{y,max} - a_{y,max}^2 a_{y0} + a_{y,max}^3$$

Somit gilt für die reibwertunabhängige Wankkennlinie für neutrales Eigenlenkverhalten:

$$\varphi\left(a_y \geq a_{y0}\right) = a_4\,a_y^4 + a_3\,a_y^3 + a_2\,a_y^2 + a_1\,a_y + a_0$$

$$\varphi\left(a_y < a_{y0}\right) = 0$$

Dabei ist mit "$a_{y0}$" diejenige auf das Fahrzeug einwirkende Querbeschleunigung bezeichnet, oberhalb derer man bei stationärer Kreisfahrt einen Wankwinkel größer Null zulässt, während bei jeder geringeren Querbeschleunigung stationär kein Wankwinkel (bzw. ein solcher vom Wert "0") vorliegen soll. Der Wert für "$a_{y0}$" ist vorzugsweise im Fahrversuch für einen bestimmten Fahrzeugtyp festlegbar.

Gleiches gilt für den Wert der Größe eines positiven sog. Zusatz-Wankwinkels $\varphi_{zusatz}$, welcher hier zur Anhebung der Wankkennlinie im Grenzbereich vorgesehen ist, so dass in diesem Grenzbereich ein neutrales bis untersteuerndes Fahrverhalten zusätzlich abgesichert ist ($\varphi_{zusatz} \geq 0$).

Während der sog. neutrale Wankwinkel $\varphi_{neutral}$ vorgehend berechnet wurde und hier übernommen werden kann, wird mit der neu eingeführten Größe "$\varphi'_{pas}$" die gewünschte Steigung der Wankkennlinie bei der Querbeschleunigung $a_{y,max}$ angegeben. Diese Steigung kann vorzugsweise so gewählt werden, dass sie maximal der Steigung der passiven Wankkennlinie des betrachteten Fahrzeugs entspricht. Damit wird sichergestellt, dass die Wankrate des mit einem aktiven Wankstabilisierungssystem ausgerüsteten Fahrzeugs bei quasistationärer Querbeschleunigungszunahme kleiner oder gleich der Wankrate des gleichen Fahrzeugs ohne ein solches aktives System ist. Auf diese letztgenannte Randbedingung kann jedoch auch verzichtet werden, so dass zur Approximation der sog. reibwertunabhängigen Wanckennlinie für neutrales Eigenlenkverhalten auf ein

Polynom zweiten Grades zurückgegriffen werden, wobei der o.g. Faktor $a_4$ den Wert "0" annimmt. Für eine solche Wankkennlinie gilt dann:

$$\varphi\left(a_y \geq a_{y0}\right) = \frac{\varphi_{neutral} + \varphi_{zusatz}}{a_{y,max}^2 - 2a_{y0}a_{y,max} + a_{y0}^2}\left(a_y^2 - 2a_{y0}\,a_y + a_{y0}^2\right)$$

$$\varphi\left(a_y < a_{y0}\right) = 0°$$

Wie bereits erwähnt, ist mit "$a_{y0}$" diejenige auf das Fahrzeug einwirkende Querbeschleunigung bezeichnet, oberhalb derer man bei stationärer Kreisfahrt einen Wankwinkel größer Null zulässt. Wie hoch der Wert für "$a_{y0}$" maximal werden kann - (dieser maximale Wert wird mit "$a_{y0,max}$" bezeichnet) - wird durch das maximale aktive Stabilisatormoment begrenzt bzw. bestimmt.
Im Falle einer "aktiven" Vorderachse gilt die folgende Beziehung

$$a_{y0,max} = \frac{M_{ARS,V,max}}{i_{St,V}\,m_A h_w}$$

bzw. im Falle einer "aktiven" Hinterachse gilt folgende Beziehung:

$$a_{y0,max} = \frac{M_{ARS,H,max}}{i_{St,H}\,m_A h_w} \text{ (für aktiven Stabilisator an der HA)}$$

Dabei sollte der Wert für "$a_{y0}$" kleiner als der Wert für "$a_{y0,max}$" gewählt werden, so dass die resultierende (reibwertunabhängige) Wankkennlinie für neutrales Eigenlenkverhalten stetig differenzierbar und monoton steigend ist.

Im Weiteren wird kurz auf einen Entwurf eines zugehörigen Reglers eingegangen, der auf einer solchen reibwertunabhängigen Wankkennlinie für neutrales Eigenlenkverhalten aufbaut und vorzugsweise bzw. insbesondere die Querdynamik des Fahrzeugs berücksichtigt. Für einen solchen Reglerentwurf liefert die reibwertunabhängige Wanckennlinie für neutrales Eigenlenkverhalten mit aktiver Hinterachse die notwendigen Arbeitspunkte. Entlang dieser Wanckennlinie ergeben sich je nach Reibwert mehrere Arbeitspunkte mit den jeweiligen maximalen Querbeschleunigungen. Jeder dieser Arbeitspunkte lässt sich je nach Kurvenradius mit unterschiedlichen Geschwindigkeiten anfahren. Dabei kann für die Dynamik des (aktiven) Wankstabilisierungssystems das Verhalten eines $PT_1$-Elementes mit einer geeigneten Zeitkonstante angenommen werden. Das querdynamische Fahrverhalten kann durch das lineare Einspurmodell beschrieben sein. Damit kann beispielsweise der in Figur 4 dargestellte Gesamt-Regelkreis für eine Wanksteuerung mit Gierratenregelung an einem zweispurigen zweiachsigen Fahrzeug mit einem aktiven Wankstabilisierungssystem an lediglich einer der beiden Achsen aufgestellt werden, wobei ein Soll-Wankwinkel $\varphi_{Soll}$ aus der erläuterten reibwertunabhängigen Wankkennlinie für neutrales Eigenlenkverhalten (im Sinne einer Vorsteuerung) bestimmt ist. In diesem Regelkreis ist ferner (wie üblich) mit $\dot{\psi}$ die Gierrate, mit dem Buchstaben $\delta$ der vorgegebene Lenkwinkel und mit dem Buchstaben $v$ die Fahrgeschwindigkeit des Fahrzeugs bezeichnet.

Demnach ermittelt ein dem Fachmann bekannter Querbeschleunigungs-Beobachter bei Kurvenfahrt des Fahrzeugs eine sog. voreilende Querbeschleunigung ("$a_{y,voreil}$"), mit welcher die Trägheit des Aktuators des Wankstabilisierungssystems überwunden und das Messrauschen minimiert werden kann. Zur Erzielung des wie oben beschrieben ermittelten Soll-Wankwinkels $\varphi_{Soll}$ wird mittels des Aktuators im Sinne einer Vorsteuerung ein Wankabstützmoment in das Fahrwerk des Fahrzeugs eingeleitet, welches in Fig.4 als Konterwankmoment ($M_{ARS,Steuerung}$) bezeichnet ist. Zusätzlich wird gemäß den Vorgaben einer Regelung ein weiteres mit "$M_{ARS,Regelung}$" bezeichnetes Wankabstützmoment in das Fahrwerk des Fahrzeugs (in Fig.4 mit "Fahrzeug" bezeichnet) eingeleitet. Wie bereits erwähnt handelt es sich bei dieser Regelung vorzugsweise um eine Gierraten-Regelung, es können jedoch auch andere Größen in einer solchen Regelung berücksichtigt werden, wozu auf die vorliegende Beschreibung weiter oben verwiesen wird. Schließlich sei noch darauf hingewiesen, dass durchaus eine Vielzahl von Details abweichend von obigen Ausführungen gestaltet sein kann, ohne den Inhalt der Patentansprüche zu verlassen.

## Patentansprüche

1. Verfahren zur Ansteuerung eines aktiven Fahrwerks eines zweiachsigen zweispurigen Kraftfahrzeugs, bei dem mittels zumindest eines geeigneten Aktuators entweder an den Rädern der Hinterachse oder an den Rädern der Vorderachse in Vertikalrichtung orientierte und einem Wanken des Fahrzeugs-Aufbaus entgegen gerichtete Kräfte in die Radaufhängung zwischen dem jeweiligen Rad und dem Aufbau einleitbar sind, wobei zusätzlich zum Ziel, den Wankwinkel zu begrenzen, der Aktuator solchermaßen angesteuert wird, dass sich bei Kurvenfahrt des Fahrzeugs ein neutrales bis leicht untersteuerndes Fahrverhalten einstellt, wobei im Hinblick auf die Querdynamik des Fahrzeugs eine Gierraten-Regelung in die Aktuator-Ansteuerung eingeht,
dadurch gekennzeichnet, dass bei der Ansteuerung des Aktuators zusätzlich ein Sollverhalten bei Teilbremsen und der Übergang zu einer Vollbremsung berücksichtigt wird, indem bei Teilbremsen ein größerer Anteil des gesamten Wankabstützmoments auf die Vorderachse verlagert wird, während bei einer Vollbremsung die Radlastdifferenz an der jeweiligen Achse durch eine Reduktion des Wankabstützmoments verringert wird.

2. Verfahren nach Anspruch 1,
dadurch gekennzeichnet, dass bei der Ansteuerung des Aktuators zusätzlich angestrebt wird, Lastwechsel-Reaktionen des Fahrzeugs zu minimieren, indem bei einem frontgetriebenen Fahrzeug bei erkanntem Lastwechsel-Fall der an der Hinterachse wirkende Anteil der gesamten Wankmoment-Abstützung erhöht wird, während bei einem heckgetriebenen Fahrzeug bei erkanntem Lastwechsel-Fall der an der Vorderachse wirkende Anteil der gesamten Wankmoment-Abstützung erhöht wird.

3. Verfahren nach einem der vorangegangenen Ansprüche,
dadurch gekennzeichnet, dass in Fällen, in denen das Stellpotential des Aktuators nahezu oder im wesentlichen ausgeschöpft ist, die Stabilisierung des Fahrzustandes und somit die Regelung der Querdynamik die höchste Priorität hat.

4. Verfahren nach einem der vorangegangenen Ansprüche,
dadurch gekennzeichnet, dass durch geeignete Ansteuerung des Aktuators in Abhängigkeit von der aktuell auf das Fahrzeug einwirkenden Querbeschleunigung im Sinne einer querdynamischern Vorsteuerung ein Wankwinkel zugelassen oder eingestellt wird, der sich ggf. unter Berücksichtigung eines betragsmäßig geringen und ein geringfügiges untersteuerndes Fahrverhalten erzeugenden Zusatz-Wankwinkels im wesentlichen aus einer sog. reibwertunabhängigen Wankkennlinie für neutrales Eigenlenkverhalten ergibt, welche für jede mögliche Querbeschleunigung die Größe eines sog. neutralen Wankwinkels angibt, mit welchem sich das Fahrzeug neutral, d.h. weder übersteuernd, noch signifikant untersteuernd verhält.

5. Verfahren nach Anspruch 4,
dadurch gekennzeichnet, dass die reibwertunabhängige Wankkennlinie für neutrales Eigenlenkverhalten wie in der beigefügten Beschreibung detailliert angegeben ermittelt wird.

**Claims**

1. A method for activating an active chassis of a two-axle two-track motor vehicle, wherein by means of at least one suitable actuator, either at the wheels of the rear axle or at the wheels of the front axle, forces oriented in the vertical direction and opposing a rolling of the vehicle body can be introduced into the wheel suspension between the respective wheel and the body, wherein, in addition to the aim of limiting the roll angle, the actuator is activated in such a way that when the vehicle is cornering, a neutral to slightly understeering driving behaviour is adjusted, wherein, in view of the transverse dynamics of the vehicle, a yaw rate control enters the actuator activation, **characterised in that** a desired behaviour during partial braking and the transition to full braking is additionally taken into account during the activation of the actuator, **in that**, during partial braking, a larger proportion of the entire roll support torque is displaced onto the front axle, while during full braking, the wheel load difference at the respective axle is reduced by a reduction in the roll support torque.

2. A method according to claim 1, **characterised in that** during the activation of the actuator, the aim is additionally to minimise load change reactions of the vehicle, **in that** in a front-wheel drive vehicle, when a load change is recognised, the proportion of the entire roll torque support acting on the rear axle is increased, while, in a rear-wheel drive vehicle, when a load change is recognised, the proportion of the total roll torque support acting on the front axle is increased.

3. A method according to any one of the preceding claims, **characterised in that** in cases where the adjusting potential of the actuator is virtually or substantially exhausted, the stabilisation of the driving state, and therefore the control of the transverse dynamics, has the highest priority.

4. A method according to any one of the preceding claims, **characterised in that** by suitable activation of the actuator depending on the lateral acceleration currently acting on the vehicle in the sense of a transverse dynamic pilot control, a roll angle is permitted or adjusted, which, optionally taking into consideration an additional roll angle, which is small in terms of amount and produces a slight understeering driving behaviour, is substantially produced from a so-called roll characteristic, which is independent of the coefficient of friction, for neutral self-steering behaviour, said roll characteristic providing the size of a so-called neutral roll angle for every possible lateral acceleration, with which roll angle the vehicle behaves neutrally, i.e. neither oversteering nor significantly understeering.

5. A method according to claim 4, **characterised in that** the roll characteristic, which is independent of the coefficient of friction, for neutral self-steering behaviour is determined as stated in detail in the accompanying description.

**Revendications**

1. Procédé de commande d'un mécanisme de déplacement actif d'un véhicule à moteur à deux essieux et à deux voies selon lequel, au moyen d'au moins un actionneur adapté, des forces orientées en direction verticale soit sur les roues de l'essieu arrière soit sur les roues de l'essieu avant et dirigées à l'opposé d'un mouvement de roulis de la carrosserie du véhicule, peut être transmise à la suspension de roue, entre la roue respective et la carrosserie, selon lequel, en plus du but consistant à limiter l'angle de roulis, l'actionneur est commandé de sorte que, lors d'un déplacement en virage du véhicule un comportement de déplacement neutre à faiblement en sous-virage est réglé, et en tenant compte de la dynamique transversale du véhicule, une régulation du taux de lacet est effectuée dans la commande de l'actionneur,
   **caractérisé en ce que**
   lors de la commande de l'actionneur on tient en outre compte d'un comportement de consigne en présence d'un freinage partiel et de la transition vers un freinage à fond en déplaçant lors d'un freinage partiel une plus grande proportion du couple support du roulis total sur l'essieu avant alors que, lors d'un freinage à fond, la différence de charge des roues sur les essieux respectifs est diminuée par une réduction du couple support du roulis.

2. Procédé conforme à la revendication 1,
   **caractérisé en ce que**
   lors de la commande de l'actionneur on cherche en outre à minimaliser les réactions d'alternance de la charge du véhicule en augmentant, dans le cas d'un véhicule à traction avant, en présence de la reconnaissance d'une alternance de la charge, la proportion du support du couple de roulis total s'exerçant sur l'essieu arrière, tandis que dans le cas d'un véhicule à traction arrière, lorsque l'on reconnait une alternance de la charge, on augmente la proportion du support du couple de roulis total s'exerçant sur l'essieu avant.

**3.** Procédé conforme à l'une des revendications précédentes,
**caractérisé en ce que**
dans des cas où le potentiel de réglage de l'actionneur est approximativement ou essentiellement épuisé, la stabilisation de l'état de déplacement et donc la régulation de la dynamique transversale a la plus grande priorité.

**4.** Procédé conforme à l'une des revendications précédentes,
**caractérisé en ce que**
par une commande adaptée de l'actionneur, en fonction de l'accélération transversale agissant actuellement sur le véhicule, on autorise ou on règle dans le sens d'une commande pilote en dynamique transversale un angle de roulis qui résulte ou fournit un angle de roulis qui résulte essentiellement, le cas échéant en tenant compte d'un angle de roulis supplémentaire relativement faible et produisant un comportement de déplacement faiblement en sous-virage, d'une courbe de roulis indépendante du coefficient de frottement pour un comportement de direction à la marche par inertie neutre, qui fournit, pour chacune des accélérations transversales possibles la grandeur d'un angle de roulis neutre pour lequel le véhicule demeure neutre, c'est-à-dire ni en survirage ni significativement en sous-virage.

**5.** Procédé conforme à la revendication 4,
**caractérisé en ce que**
la courbe de roulis indépendante du coefficient de frottement pour le comportement de direction à la marche par inertie neutre est déterminée comme décrit de manière détaillée dans la description jointe en annexe.

VA aktiv, HA passiv

$\varphi$

$n$

übersteuernd

$\varphi_{neutral}^{VA}$    neutral

$\varphi_{grenz,2}^{VA}$

3

2

1    untersteuernd

$\varphi_{grenz,1}^{VA}$ = 0°

$a_{y,grenz,1}^{VA}$    $a_{y,max}^{VA}$    $a_y$

$a_{y,grenz,2}^{VA}$

*Fig. 1a*

HA aktiv, VA passiv

$\varphi$

$n$

untersteuernd

$\varphi_{neutral}^{HA}$    neutral

$\varphi_{grenz,2}^{HA}$

3

2

1    übersteuernd

$\varphi_{grenz,1}^{HA}$ = 0°

$a_{y,grenz,1}^{HA}$    $a_{y,max}^{HA}$    $a_y$

$a_{y,grenz,2}^{HA}$

*Fig. 1b*

$\varphi$ [°]

$\mu = 1$

3

2,5

2

1,5

1

0,5

$\mu = 0,6$

$\mu = 0,2$

— · — ·   passiv

— —   VA-ARS

———   HA-ARS

0   1   2   3   4   5   6   7   8   9   $a_y$ [m/s²]

*Fig. 2*

$$\varphi_{neutral} + \varphi_{zusatz}$$

$$\frac{\delta\varphi}{\delta a_y} = 0 \qquad \frac{\delta\varphi}{\delta a_y} = \varphi'_{pas}$$

$$\varphi = 0°$$

$$a_{y0} \qquad\qquad a_{y,max}$$

*KennLinie*

*Fig. 3*

$M_{ARS,Steuerung}$

$a_y$-Beobachter $\xrightarrow{a_{y,vorei}}$ Wankwinkel-vorgabe $\xrightarrow{\varphi_{soll}}$ Konter-wankmoment

$\delta$

$v$

$M\dfrac{\mu}{ARS}$ Fahrzeug $\begin{array}{l} a_{y,ist} \\ \dot{\psi}_{ist} \end{array}$

$M_{ARS,Regelung}$ Regelung $\xleftarrow{\Delta\dot{\psi}} \dot{\psi}_{soll}$ Referenzmodell $\begin{array}{l}\leftarrow \delta \\ \leftarrow v \\ \leftarrow \mu\end{array}$

*Fig. 4*

15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005037478 A1
- DE 102004057928 A1